# EUROPÄISCHE PATENTSCHRIFT

(11) **EP 0 504 357 B1**
(45) Veröffentlichungstag und Bekanntmachung des Hinweises auf die Patenterteilung: **24.01.1996**
(21) Anmeldenummer: 91917612.3
(22) Anmeldetag: 04.10.1991
(51) Int. Cl.: B60T 11/16

(54) **HAUPTBREMSZYLINDER FÜR EINE BLOCKIERGESCHÜTZTE, HYDRAULISCHE BREMSANLAGE**
BRAKE MASTER CYLINDER FOR AN ANTI-LOCK HYDRAULIC BRAKING SYSTEM
MAITRE-CYLINDRE DE FREIN POUR SYSTEME HYDRAULIQUE DE FREINAGE A DISPOSITIF ANTI-BLOQUEUR

(30) Priorität: 17.10.1990 DE 4032873; 25.05.1991 DE 4117098; 29.06.1991 DE 4121579
(43) Veröffentlichungstag der Anmeldung: 23.09.1992
(73) Patentinhaber: ITT Automotive Europe GmbH, D-60488 Frankfurt (DE)
(72) Erfinder: BURGDORF, Jochen, D-6050 Offenbach-Rumpenheim (DE); VOLZ, Peter, D-6100 Darmstadt (DE); VOLKMAR, Werner, D-6270 Walsdorf (DE); SEEGER, Rainer, D-6105 Ober Ramstadt (DE)
(86) Internationale Anmeldenummer: EP9101891
(87) Internationale Veröffentlichungsnummer: WO9206875

(56) Entgegenhaltungen:
- DE-A- 3 641 712
- DE-A- 3 932 248
- FR-A- 2 573 709
- GB-A- 2 193 771
- PATENT ABSTRACTS OF JAPAN vol.12, No. 27 (M-662)(2874) 27 January 1988 & JP, A, 62 181 949 (TOYOTA) 10 August 1987 see Abstract
- PATENT ABSTRACTS OF JAPAN vol. 12, No. 27 (M-662) (2874) 27 January 1988 & JP, A, 62 181 950 (TOYOTA) 10 August 1987 see abstract
- PATENT ABSTRACTS OF JAPAN vol. 12, No. 360 (M-746)(3207) 27 September 1988 & JP, A, 63 116 971 (TOYOTA) 21 May 1988 see abstract

## Beschreibung

Die Erfindung bezieht sich auf einen Hauptbremszylinder für eine blockiergeschützte, hydraulische Bremsanlage gemäß dem Oberbegriffe des Anspruchs 1.

Eine derartige Bremsanlage ist z. B. aus der DE-OS 36 27 000 bekannt.

Die Bremsanlage besteht aus einem Hauptbremszylinder, an den über Bremsleitungen Radbremsen angeschlossen sind. Den Radbremsen sind Ein- und Auslassventilen zugeordnet, wobei das Einlaßventil die Bremsleitung kontrolliert und das Auslaßventil die Verbindung der Radbremsen zu einem Druckmittelvorratsbehälter. Weiterhin sind Pumpen vorgesehen, die aus dem Vorratsbehälter in die Arbeitskammern des Hauptbremszylinders fördern.

Der Hauptbremszylinder ist mit Zentralventilen versehen, die die Verbindung der Arbeitskammern des Hauptbremszylinders mit dem Druckmittelvorratsbehälter kontrollieren. Solange der Hauptbremszylinder nicht betätigt ist, sind die Zentralventile offen, so daß die an die Arbeitskammern angeschlossenen Bremskreise mit dem Druckmittelvorratsbehälter in Verbindung stehen. Es kann jederzeit ein Druck und Volumenausgleich stattfinden. Mit Betätigen des Bremspedals werden die Zentralventile geschlossen, so daß die Bremskreise hydraulisch gegenüber dem Vorratsbehälter gesperrt sind und so ein Druck aufbaubar ist.

Die Zentralventile erfüllen aber zusätzlich eine Regelfunktion.

Während einer Blockierschutzregelung fördern die Pumpen aus dem Vorratsbehälter in den Hauptbremszylinder. Dabei werden die Arbeitskolben des Hauptbremszylinders zurückgestellt, bis sich die Zentralventile öffnen. Überschüssiges Druckmittel, das nicht von den Bremskreisen aufgenommen werden kann, gelangt in den Vorratsbehälter. Die Zentralventile arbeiten dabei als Regelventile, die den Druck in den Bremskreisen fußkraft proportional einstellen. Bei diesem Regelvorgang öffnen und schließen die Zentralventile in schneller Folge. Dies bedingt eine besondere Konstruktion dieser Ventile.

Es sind Zentralventile bekannt, bei denen zum mindesten ein Element (Ventilkörper bzw. Ventilsitz) aus weichelastischem Material besteht. Derartige Zentralventile werden aber nur eingesetzt, um die Bremskreise mit Beginn einer Bremsung hydraulisch zu sperren. Als Regelventile sind sie ungeeignet, da das Gummi beim Schließvorgang vom Volumenstrom in die zu verschließende Öffnung hineingedrückt und durch den sich aufbauenden Druck in der Arbeitskammer zwischen der Anschlagfläche des Ventils und der Dichtfläche abgeschert würde.

Derartige Ventile sind aber relativ unempfindlich gegen Verschmutzung, da Schmutzpartikel im Hydraulikmedium zwar in das Gummi gedrückt werden, dort aber hermetisch vom Gummi umschlossen werden, so daß von ihnen keine Störung auf den Schließvorgang ausgeht. Außerdem verkraften diese Ventile einen relativ hohen Verschleiß bzw. Beschädigung der Dichtgeometrie ohne Funktionseinbuße.

Werden derartige Ventile als Regelventile eingesetzt, so ist es notwendig, Ventilkörper und Ventilsitz aus hartem Material, z. B. Stahl, auszubilden. Derartige Materialien haben aber den Nachteil, daß die Schmutzpartikel die Oberfläche von Ventilkörper und Ventilsitz beschädigen und zerstören, so daß das Ventil nicht mehr vollständig dicht schließt. Die Ventile müssen daher mit Filter versehen werden, die die Schmutzpartikel aus der Hydraulikflüssigkeit herausfiltern.

Derartige Filter sind nur schwer montierbar. Sie erfordern einen großen Einbauraum und bestehen aus teurem Material.

Aus der JP 62 181 949 ist ein Hauptbremszylinder mit einem eine Arbeitskammer begrenzenden Arbeitskolben, der zur Verringerung des Volumens der Arbeitskammer verschiebbar geführt ist, einem Druckmittelvorratsbehälter, einem Zentralventil in der Verbindung Arbeitsraum-Druckmittelvorratsbehälter, das in der Grundstellung des Arbeitskolbens die Verbindung offenhält, und bei einer Verschiebung des Arbeitskolbens schließt, bekannt, wobei das Zentralventil aus zwei Einzelventilen besteht, die hintereinander geschaltet sind und bei Verschieben des Arbeitskolbens nacheinander schließen. Als nachteilig ist bei diesem Hauptbremszylinder anzusehen, daß das zuerst schließende bzw. zuletzt öffnende der beiden Einzelventile ein elastomeres Dichtelement aufweist, welches während einer oben beschriebenen Blockierschutzregelung einem hohen Verschleiß unterliegt.

Ein derartiger Hauptbremszylinder kann somit nur bei relativ niedrigen Drücken eingesetzt werden und eignet sich nicht zur Verwendung in einer blockiergeschützten Bremsanlage.

Die Erfindung beruht auf der Aufgabe, Zentralventile für die Hauptbremszylinder einer blockiergeschützten Bremsanlage zu schaffen, die eine Druckregelfunktion ausüben können, redundant, beständig und sicher arbeiten und möglichst ohne zusätzliche Filterelemente einsetzbar sind.

Die Aufgabe wird dadurch gelöst, daß das Zentralventil aus einem ersten und zweiten Ventil besteht, die hintereinander geschaltet sind, und nacheinander schließen. Beim Betätigen des Pedals wird zunächst das erste Ventil und dann das zweite Ventil geschlossen.

Das erste Ventil besteht aus metallischen Elementen und übernimmt primär die Dichtfunktion und üblicherweise die Regelfunktion.

Das zweite Ventil weist zumindest ein weichelastisches Teil auf und übernimmt die Dichtfunktion, falls dies bei dem ersten Ventil aufgrund von Verunreinigungen in der Hydraulikflüssigkeit oder Beschädigung nicht mehr möglich ist.

Konstruktive Ausgestaltungen dieser Ventile sind in den Unteransprüchen benannt. Wichtig ist, daß falls das erste Ventil funktionsuntüchtig wird, das zweite Ventil sicherstellt, daß die Bremskreise hydraulisch gesperrt werden können, und damit eine nicht geregelte Bremsung auf jeden Fall möglich bleibt.

Um ein kompaktes, doppeltes Zentralventil zu bauen, das keine hohen Anforderungen an die Fertigungstoleranz stellt, wird vorgeschlagen, daß die Ventilsitze der Einzelventile bezogen auf die Verschiebungsachse des Arbeitskolbens in etwa auf gleicher Höhe liegen und daß die radiale Ausdehnung des Ventilsitzes des einen Ventils kleiner als die radiale Ausdehnung des Ventilsitzes des anderen Ventils.

Weiterhin wird vorgeschlagen, daß der Ventilsitz des ersten Ventils, das aus metallischem Material besteht, einen kleineren Durchmesser aufweist, als der Ventilsitz des zweiten Ventils, dessen Ventilsitz oder Ventilkörper aus weichelastischem Material besteht.

Diese Anordnung hat gegenüber dem Hauptbremszylinder der genannten Offenlegungsschrift den Vorteil, daß das Ventil mit dem weichelastischen Sitz an den Druckraum des Hauptbremszylinders anschließt. Hierdurch kann sowohl das Öffnungs- als auch das Schließverhalten verbessert werden.

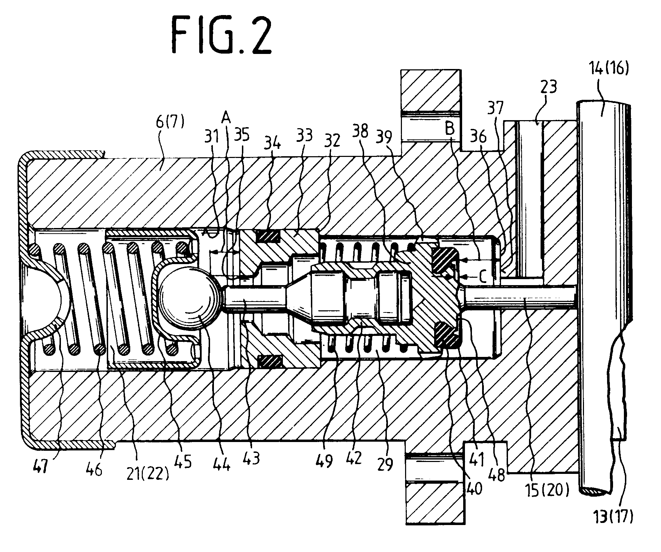

Die Konstruktion des zweiten Ventils lehnt sich an die Darstellung der Figur 2 des deutschen Gebrauchsmusters G 88 122 81 an. Dieses Gebrauchsmuster beschreibt ein Zentralventil mit einem Einzelventil dessen Ventilsitz aus weichelastischem Material besteht. Der Ventilkörper besteht aus einer Scheibe, mit einer umlaufenden Nut, die in das weichelastische Material gedrückt wird. Weiterhin ist ein Längsstift vorgesehen, der mit der Scheibe verbunden ist und an einem Anschlagstift anliegt.

Um ein weiteres (erstes) Ventil zu realisieren, wird vorgeschlagen, daß der Ventilkörper des weiteren (des ersten) Ventils auf den Betätigungsstift des Ventilkörpers des zweiten Ventils geführt wird.

Der Ventilkörper des ersten Ventils kann als Halbkugel oder aber als Lochscheibe ausgebildet sein.

Weiterhin kann eine Betätigung des ersten Ventils unmittelbar durch den schon genannten Anschlagstift erfolgen, oder aber über einen einstellbaren Anschlag am Ventilsitz des zweiten Ventils, wobei der Anschlag vorzugsweise als Hülse ausgebildet ist, die auf den Betätigungsstift des zweiten Ventils aufschiebbar und fixierbar ist.

In der schon benannten Gebrauchsmusterschrift ist das weichelastische Material mit dem Arbeitskolben verbunden. Dazu ist eine Haltehülse vorgesehen.

Eine weitere Vereinfachung kann erzielt werden, wenn das weichelastische Material in eine Nut des Ventilkörpers des zweiten Ventils eingelegt wird. Um ein Verlaufen des weichelastischen Materials unter Druck zu verhindern, sollte das Material, vorzugsweise ein Gummiring mit quadratischem Querschnitt, von drei Seiten vollständig eingefaßt sein.

Der Gummiring wird durch Form und/oder Stoffschluß mit dem Ventilkörper verbunden. Bei gummiartigen Materialien kann z.B. eine Vulkanisation vorgesehen sein.

Im folgenden soll der Erfindungsgedanke anhand von 9 Figuren näher erläutert werden.

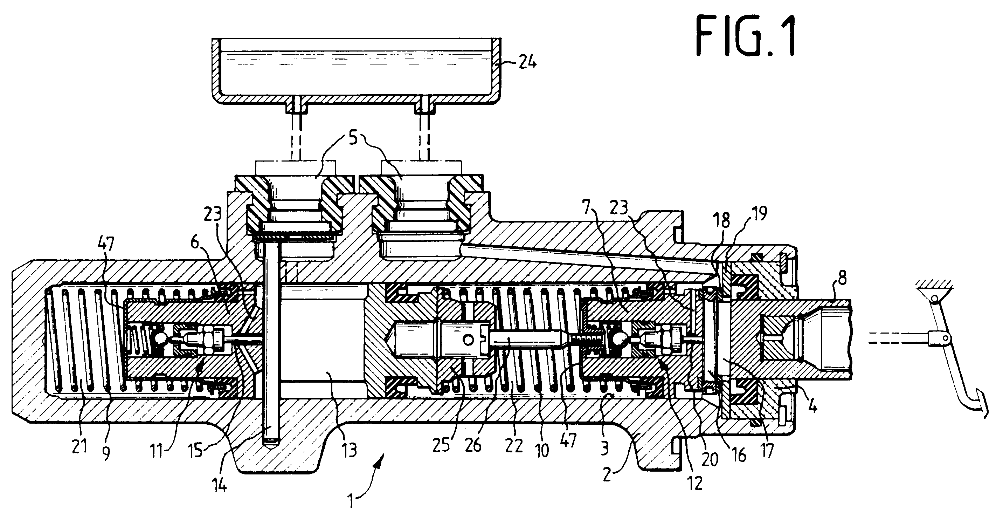

Zunächst sei auf die Figur 1 Bezug genommen.

Der Hauptbremszylinder 1 besteht aus einem Gehäuse 2 mit einer Sackbohrung 3. Das offene Ende der Sackbohrung 3 wird durch einen Stopfen 4 verschlossen. Weiterhin weist das Gehäuse 2 Anschlüsse 5 für einen Druckmittelvorratsbehälter 24 auf. In der Bohrung sind ein Schwimmkolben 6 und ein Druckstangenkolben 7 dichtend geführt.

Ein Teilstück 8 des Druckstangenkolben 7 ist dichtend durch einen Stopfen 4 nach außen geführt. An dem Teilstück 8 ist die Druckstange eines Pedals (schematisch angedeutet) abgestützt. Eine erste Feder 9 stützt sich einerseits am Boden der Bohrung 3 und andererseits am Schwimmkolben 6 ab. Eine zweite Feder 10 ist zwischen dem Schwimmkolben 6 und dem Druckstangenkolben 7 angeordnet.

In den Kolben 6 und 7 ist je ein Zentralventil 11,12 angeordnet. Eine genauere Beschreibung der Zentralventile erfolgt in Zusammenhang mit der Figur 2. Beide Kolben weisen je einen Schlitz 13 bzw. 17 auf. Die Schlitze sind in der Form eines Langlochs ausgebildet, wobei sich das Langloch in der Achse des Kolbens erstreckt und gegenüberliegende Mantelflächen des Kolbens verbindet.

Durch den Schlitz 13 des Schwimmkolbens 6 ist ein Querstift 14 gesteckt, der gehäusefest verankert ist.

Die Feder 9 drückt den Schwimmkolben 6 gegen den Stift 14, wodurch die Grundposition dieses Kolbens definiert ist. Ein Stößel 15 erstreckt sich in der Achse des Kolbens und dient, wie weiter unten erläutert wird, als Betätigung für das Zentralventil 11. Der Stößel 15 liegt am Querstift an und hält das Zentralventil 11 offen.

Ein ähnlicher Stift 16 ist durch den Schlitz 17 des Druckstangenkolbens 7 hindurchgesteckt. Er ist an einem Ring 18 befestigt, der auf dem Teilstück 8 des Druckstangenkolbens 7 gleitet. Der Ring 18 liegt an einer Scheibe 19 an, die am Stopfen 4 abgestützt ist. Die Feder 10 zwischen den Kolben schiebt den Druckstangenkolben gegen den Stift 16, wobei der Ring 18 an der Anschlagscheibe 19 anliegt. Auf diese Weise ist die Grundposition des Druckstangenkolbens 7 definiert. Ein Stößel 20 erstreckt sich in der Achse des Druckstangenkolbens 7, er dient zur Betätigung des Zentralventils 12, in der Grundposition des Kolbens 7 liegt der Stößel 20 am Querstift 16 an und hält das Zentralventil offen.

Die Kolben begrenzen zwei Arbeitskammern 21 und 22, die mit den Bremskreisen und mit dem Ausgang der Pumpe verbunden sind.

Hinzuweisen ist noch auf eine Fesselung zwischen den beiden Kolben, die aus einem Gegenstück 25 und einer Abstandsschraube 26 besteht, die mit ihrem Kopf in das Gegenstück eingreift und auf diese Weise einen maximalen Abstand zwischen den beiden Kolben definiert.

Die Stößel 15 und 20 sind in engen Längsbohrungen geführt, die gleichzeitig dem Druckmittelaustausch zwischen den Arbeitskammern 21,22 einerseits und dem Vorratsbehälter 24 andrerseits dienen. Damit ein ungestörter Druckmittelausgleich stattfinden kann, können Ausgleichsbohrungen 23 in den Kolben vorgesehen sein, die sich im wesentlichen quer zur Längsachse der Kolben erstrecken. Ersatzweise können auch die Stößel 15 und 20 mit Längsnuten versehen werden.

Es folgt nun eine detaillierte Beschreibung eines Zentralventils 11 bzw. 12 anhand der Figur 2:
Dargestellt ist ein Teil der Kolben 6 bzw. 7, der das Zentralventil aufnimmt. Am rechten Bildrand erkennt man den Querstift 14 bzw. 16.

Der Kolben 6 bzw. 7 ist mit einer mehrfach gestuften Längsbohrung 31 versehen, die sich von der Stirnseite, die den jeweiligen Arbeitsraum 21,22 begrenzt, bis zum Schlitz 13 bzw. 17 erstreckt. Die größte Stufe der Längsbohrung findet sich im unmittelbaren Anschluß an die Stirnseite zum Arbeitsraum. Dieser Abschnitt endet an einer Stufe 32, an der ein zylinderförmiges Einsatzstück 33 abgestützt ist. Das Einsatzstück ist mit einer Dichtung 34 versehen, die das Einsatzstück am Außenmantel abdichtet, womit lediglich ein Druckmittelfluß durch den zentralen Kanal des Einsatzstücks 33 erlaubt ist. Das Element kann auch auf Grund einer speziellen Außenkontur dichtend in die Bohrung eingedrückt werden. Der zentrale Kanal ist an seinen im Arbeitsraum 21 bzw. 22 zugewandten Ende mit einem gehärteten Dichtsitz 35 versehen. Vom Einsatzstück 33 ausgehend erstreckt sich ein weiteres Stück der Längsbohrung 31 bis zu einer zweiten Stufe 36, die eine ringförmige Fläche aufweist, die als Dichtfläche 37 für das zweite Ventil dient. An die zweite Stufe 36 schließt sich ein abschließender Kanal an, in dem der Betätigungsstößel 15 bzw. 20 geführt ist. Von diesem Kanal zweigt auch die Ausgleichsbohrung 23 ab. Dies ermöglicht es, den Kanal zumindest in Teilbereichen sehr eng auszuführen, so daß er als Führung für den Stößel 15 bzw. 20 dienen kann.

Im Raum zwischen der ersten Stufe 32 und der zweiten Stufe 36 ist ein Trägerkörper 38 angeordnet, an den der Stößel 15 bzw. 20 angeformt ist. Der Durchmesser des Trägerkörpers 38 entspricht im wesentlichen der Durchmesser dieses Teilstückes der Längsbohrung 31, so daß eine Führung gegeben ist. Ein Druckmittelfluß am Trägerkörper 38 vorbei wird durch Durchlaß 39 am Außenrand des Trägerkörpers 38 realisiert. An einer Ringfläche des Trägerkörpers 38, die der zweiten Stufe 36 zugewandt ist, ist in einer Nut ein Dichtring 40 eingelassen, der an die Stufe 36 bzw. Dichtfläche 37 anlegbar ist. Die Ringfläche weist eine Anschlagfläche 48 auf, der an die Stufe 37 anlegbar ist. Der Dichtring 40 weist einen Wulst 41 auf, der über die Anschlagfläche 48 hinausragt, und zwar um den Abstand C. Der Abstand C entspricht der Einfederung des Wulsts 41.

Der Trägerkörper 38 weist eine Sackbohrung auf, die sich zu dem Ende hin öffnet, das vom Stift 15 bzw. 20 abgewandt ist. In dieser Bohrung steckt ein Betätigungsstift 43, der über eine Einquetschung 42 fest mit dem Ventilträger 38 verbunden ist.Diese Anordnung ermöglicht es, bevor Trägerkörper 38 und Stift 49 miteinander verquetscht werden, eine Justirung vorzunehmen, indem der Betätigungstift 43 in der Bohrung des Trägerkörpers 38 verschoben wird. Der Stift 43 ragt durch den zentralen Kanal des Einsatzstückes 33 hindurch und liegt an einer Ventilkugel 44 an, die mit dem Ventilsitz 35 zusammenwirkt. Die Ventilkugel 44 wird gehalten von einem Führungselement 45, an dem eine Feder 46 abgestützt ist. Diese Feder 46 stützt sich auf ihrer anderen Seite an einer Hülse 47 ab, die auf den Kolben 6 bzw. 7 aufgesetzt ist (siehe auch Figur 1). Anzumerken ist auch, daß zwischen dem Einsatzstück 33 und dem Ventilträger 38 eine Feder 49 abgestützt ist, die ebenso wie die Feder 46 dafür sorgt, daß das jeweilige Ventil sicher schließt.

Die Verbindung des Ventilkörpers 38 mit dem Betätigungsstift 43 ist so abgestimmt, daß in der Grundstellung des Zentralventils das erste Ventil, gebildet aus Ventilkugel 44 und Ventilsitz 35 einen Öffnungsabstand A aufweist, während das zweite Ventil, gebildet aus dem Dichtungsring 40 bzw. dem Wulst 41 und der Dichtfläche 37, einen Öffnungsabstand B aufweist. Der Abstand A ist kleiner als der Abstand B.

Der Hauptbremszylinder arbeitet wie folgt:
Figur 1 und Figur 2 zeigen den Hauptbremszylinder bzw. das Zentralventil in einer nicht betätigten Situation. Die Kolben 11 und 12 befinden sich in ihrer Grundposition, der Stößel 15 bzw. 20 liegt am jeweiligen Querstift 14 bzw. 16 an, so daß die am Kolben ausgebildeten Ventilsitze 35 und 37 sich im Abstand zu ihren Ventilkörpern 44 bzw. 48 befinden. Es entsteht eine Druckmittelverbindung zwischen den Arbeitskammern 21 und 22 und dem Vorratsbehälter 24. Wird nun das Pedal betätigt, so verschiebt sich der Druckstangenkolben 7 unter Einfluß der Pedalkraft gemäß der Darstellung nach links und nimmt über die Feder 10 den Schwimmkolben 6 mit. Die Kolben werden also relativ zum Gehäuse verschoben, während der Stößel 15 bzw. 20, der Ventilträger 38, der Betätigungsstift 43 und der Ventilkörper 44 relativ zum Gehäuse des Hauptbremszylinders nicht verschoben werden. Die Federn 46 und 49 halten die Ventilkörper in ihren Positionen. Sobald die Kolben 6,7 die Strecke A zurückgelegt haben, legt sich der Ventilsitz 35 an die Ventilkugel 44 an, so daß die obengenannte Verbindung zwischen den Arbeitskammern 21 und 22 auf der einen Seite und dem Vorratsbehälter 24 auf der anderen Seite unterbrochen wird. In den Arbeitskammern 21, 22 kann nun bei weiterer Verschiebung der Kolben ein Druck aufgebaut werden.

Werden die Arbeitskolben weiter nach links bewegt, so löst sich der Betätigungsstift 43 von der Ventilkugel 44, und der Ventilsitz 37 nähert sich dem Wulst 41. Sobald der Kolben 6 bzw. 7 eine Gesamtstrecke B zurückgelegt hat, schließt auch das zweite Ventil. Dies geschieht drucklos, da in dem Zwischenraum 29 zwischen den beiden Einzelventilen kein Druck aufgebaut ist. Es erfolgt somit keine Beschädigung des Gummirings 40.

Solange das erste Ventil 44,35 sicher schließt, ist das Verhalten des zweiten Ventils ohne Bedeutung.

In einem Regelvorgang, wenn von der Pumpe Druckmittel in die Arbeitskammer 21,22 gefördert wird, werden die Arbeitskolben zurück auf ihre Grundposition geschoben. Dann öffnet zunächst wieder das zweite Ventil 40,37 und als nächstes das erste Ventil 44,35. Nun kann Druckmittel über das sich öffnende erste Ventil und an dem offenen zweiten Ventil - der Öffnungsspalt beträgt B minus A - vorbeifließen. Der sich einstellende kleine Druckabbau in den Arbeitskammern 21,22 führt dazu, daß die Arbeitskolben wiederum nach links geschoben werden und das erste Ventil schließt. Infolgedessen läuft ein Regelvorgang ab, der aus schnell aufeinanderfolgenden Öffnungsund Schließvorgängen des ersten Ventils besteht. Dann kann letztlich soviel Druckmittel über das Ventil abfließen, wie von der Pumpe in den Hauptzylinder gefördert wird. Der Hauptzylinderdruck entspricht dabei dem Pedaldruck.

Da das Druckmittel im wesentlichen ungefiltert ist - die vorliegende Ausführungsform sieht keine Filter vor - kann es vorkommen, daß sich Schmutzpartikel zwischen die Ventilkugel 44 und den Ventilsitz 35 setzen. Diese werden in die Oberfläche der Kugel oder des Ventilsitzes eingehämmert und können daher auch nicht ohne weiteres abfließen. Gleichzeitig verhindern sie aber, daß das Ventil vollständig dicht schließt. Die Dichtfunktion des ersten Ventils kann damit eingeschränkt bzw. vollständig verloren gehen. Seine Funktion wird nun vom zweiten Ventil übernommen, wobei das geschlossene, undichte erste Ventil den Volumenstrom so stark drosselt, daß der Wulst 41 des Dichtrings 40 nicht mehr zwischen dem Anschlag 48 und die Dichtfläche 37 hineingezogen und abgequetscht werden kann.

Bei einer ungeregelten Bremsung schließt zwar auch zunächst das erste Ventil, dies führt aber wegen seiner Funktionsunfähigkeit dazu, daß die Verbindung zwischen den Arbeitskammern 21,22 und dem Vorratsbehälter 24 nicht geschlossen wird. Erst wenn die Strecke B überwunden ist, schließt das zweite Ventil und sorgt für eine hydraulische Sperrung der Bremskreise.

Eine Verschmutzung dieses zweiten Ventils ist nicht so kritisch, da die Schmutzpartikel vom weichen Gummi aufgenommen und umschlossen werden. Es ist somit sichergestellt, daß auch bei ausgefallenem ersten Ventil ein Bremsdruckaufbau möglich bleibt.

In gewissem Umfang kann das zweite Ventil auch eine Regelung übernehmen, wobei allerdings die Öffnungsund Schließvorgänge unter Druck erfolgen, wodurch eine Beschädigung des Gummis durch Fließ- und Quetschvorgänge nicht ausgeschlossen ist. Es ist aber davon auszugehen, daß das Gummi zum mindesten einige Regelvorgänge unbeschadet übersteht.

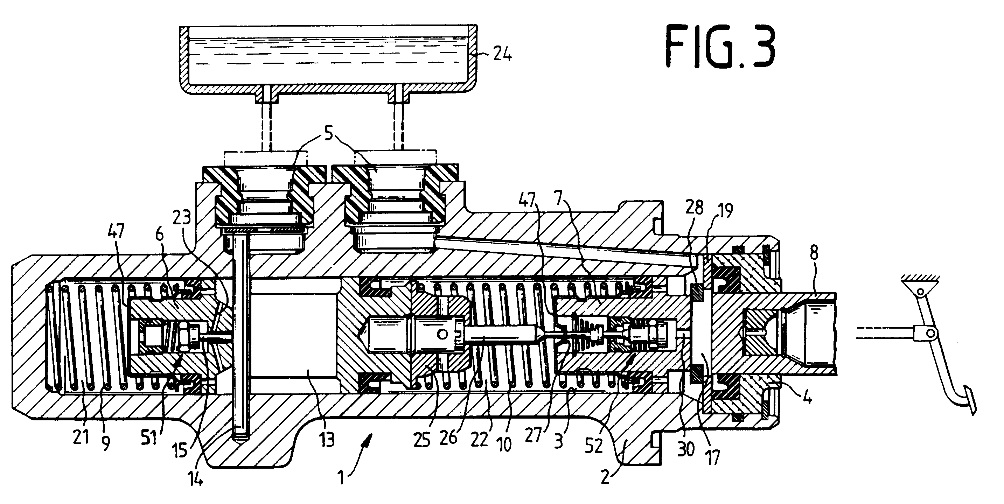

Der in Fig. 3 gezeigte Hauptbremszylinder 1 besteht aus einem Gehäuse 2 mit einer Sackbohrung 3. Das offene Ende der Sackbohrung 3 ist durch einen Stopfen 4 verschlossen. Weiterhin weist das Gehäuse 2 Anschlüsse 5 für einen Ausgleichsbehälter 24 auf. In der Bohrung sind ein Schwimmkolben 6 und ein Druckstangenkolben 7 dichtend geführt.

Ein Teilstück 8 des Druckstangenkolbens 7 ist dichtend durch den Stopfen 4 nach außen geführt. An dem Teilstück 8 ist die Druckstange eines Pedals (schematisch angedeutet) abgestützt. Eine erste Feder stützt sich einerseits am Boden der Bohrung 3 und andererseits am Schwimmkolben 6 ab, eine zweite Feder 10 ist zwischen dem Schwimmkolben 6 und dem Druckstangenkolben 7 angeordnet.

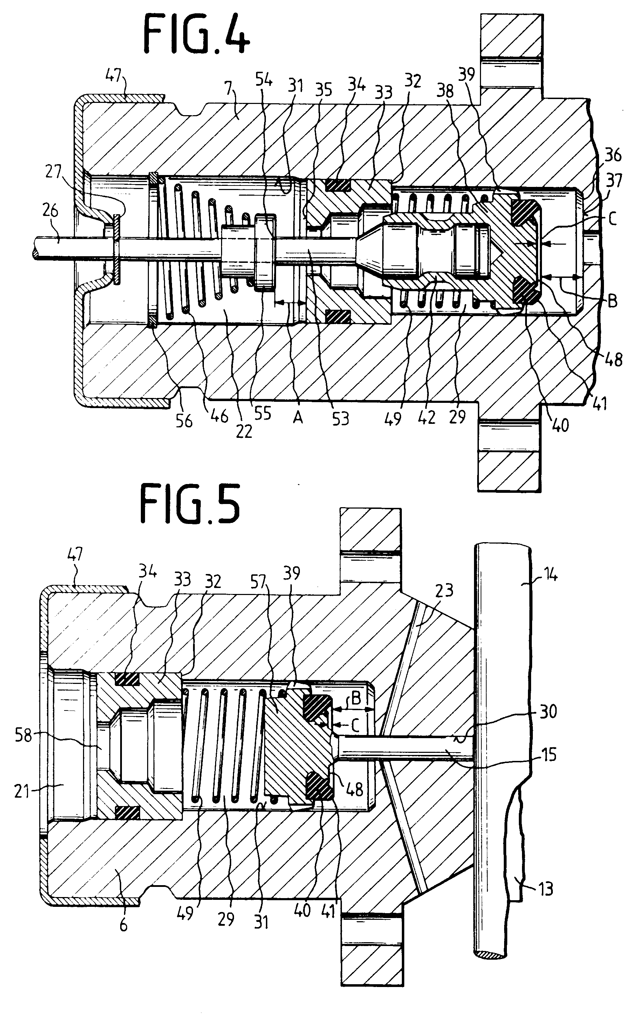

In den beiden Kolben 6 und 7 ist je ein Zentralventil 51,52 angeordnet. Eine genauere Beschreibung der Zentralventile 51,52 erfolgt im Zusammenhang mit den Fig. 4 und 5. Beide Kolben weisen je einen Schlitz 13 bzw. 17 auf. Die Schlitze 13,17 sind in der Form eines Langloches ausgebildet, wobei sich das Langloch in der Achse des Kolbens erstreckt und gegenüberliegende Mantelflächen des Kolbens verbindet. Durch den Schlitz 13 des Schwimmkolbens 6 ist ein Querstift 14 gesteckt, der gehäusefest verankert ist.

Die Feder 9 drückt den Schwimmkolben 6 gegen den Stift 14, wodurch die Grundposition dieses Kolbens definiert ist. Ein Stößel 15 erstreckt sich in der Achse des Kolbens und dient, wie weiter unten erläutert wird, als Betätigung für das Zentralventil 51. Der Stößel 15 liegt am Querstift 14 an und hält das Zentralventil 51 in der dargestellten Ruheposition offen.

Am Schwimmkolben 6 ist ein Gegenstück 25 befestigt, das zusammen mit dem Abstandshalter 26, der daran befestigten Scheibe 27 und der am Druckstangenkolben 7 befestigten Hülse 47 den Druckstangenkolben 7 an den Schwimmkolben 6 fesselt (s. auch Fig. 4). Gleichzeitig mit der Fesselung ist so auch die Feder 10 zwischen Hülse 47 und Gegenstück 25 in der dargestellten Ruhestellung vorgespannt. Gegenstück 25, Abstandshalter 26 und die Position der Scheibe 27 auf dem Abstandshalter 26 sind so bemessen, daß die Feder 10 den Druckstangenkolben 7 über den Ring 28 gegen die gehäusefeste Anschlagscheibe 29 drückt.

Der Ring 28 ist neben dem Schlitz 17 angeordnet, letzterer bildet einen Teil des Verbindungskanals vom Ausgleichsbehälter 24 am Zentralventil 52 vorbei zur Arbeiskammer 22 zwischen den beiden Kolben 6,7. Vom Schlitz 17 zum Zentralventil 52 führt ein Axialkanal 30, dessen Ausgang vom Zentralventil 52 verschließbar ist.

Im Schwimmkolben 6, der zusammen mit dem Ende der Bohrung 3 eine weitere Arbeitskammer 21 begrenzt, sind zwei schräge Ausgleichsbohrungen 23 vorgesehen, die den Druckmittelfluß vom Ausgleichsbehälter 24 zum Zentralventil 51 sicherstellen.

Die beiden Zentralventile 51,52 werden nachfolgend anhand der Figuren 4 und 5 detailliert beschrieben.

Fig. 4 zeigt den Druckstangenkolben 7, teilweise vergrößert. Rechts erkennt man einen Teil des Axialkanals 30. Der Kolben 7 ist mit einer mehrfach gestuften Längsbohrung 31 versehen, die sich von der Stirnseite, die der Arbeitskammer 22 zugewandt ist, bis zum Schlitz 17 erstreckt. Die größte Stufe der Längsbohrung befindet sich im unmittelbaren Anschluß an die Stirnseite zum Arbeitsraum. Dieser Abschnitt endet an einer Stufe 32, an der ein zylinderförmiges Einsatzstück 33 abgestützt ist. Das Einsatzstück 33 ist mit einer Dichtung 34 versehen, die das Einsatzstück 33 am Außenmantel abdichtet, womit lediglich ein Druckmittelfluß durch den zentralen Kanal des Einsatzstücks 33 erlaubt ist. Das Element kann auch aufgrund einer speziellen Außenkonturdichtend in die Bohrung eingedrückt werden. Der zentrale Kanal ist an seinem dem Arbeitsraum 22 zugewandten Ende mit einem Dichtsitz 35 versehen. Vom Einsatzstück 33 ausgehend, erstreckt sich ein weiteres Stück der Längsbohrung 31 bis zu einer zweiten Stufe 36, die eine ringförmige Fläche aufweist, welche als Dichtfläche 37 für das zweite Ventil dient. An die zweite Stufe 36 schließt sich der Axialkanal 30 an.

Im Zwischenraum 29 zwischen der ersten Stufe 32 und der zweiten Stufe 36 ist ein Trägerkörper 38 angeordnet. Der Durchmesser des Trägerkörpers 38 entspricht im wesentlichen dem Durchmesser dieses Teilstücks der Längsbohrung 31, so daß eine Führung gegeben ist. Ein Druckmitteldurchfluß am Trägerkörper 38 vorbei wird durch Durchlässe 39 am Außenrand des Trägerkörpers 38 realisiert. An eine Ringfläche des Trägerkörpers 38, die der zweiten Stufe 36 zugewandt ist, ist in einer Nut ein Dichtring 40 eingelassen, der an die Stufe 36 bzw. Dichtfläche 37 anlegbar ist. Die Ringfläche weist eine Anschlagfläche 48 auf, die an die Stufe 36 anlegbar ist. Der Dichtring 40 weist einen Wulst 41 auf, der über die Anschlagfläche 48 hinausragt, und zwar um den Abstand C. Der Abstand C entspricht dem Einfederweg des Wulstes 41.

Der Trägerkörper 38 weist eine Sackbohrung auf, die sich zu dem Ende hin öffnet, das vom Dichtring 40 abgewandt ist. In dieser Bohrung steckt ein zylinderischer Fortsatz 53, der über eine Klemmeinrichtung 42 fest mit dem Ventilträger 38 verbunden ist. Diese Anordnung ermöglicht es, bevor Trägerkörper 38 und Fortsatz 53 miteinander verquetscht werden, eine Justierung vorzunehmen, indem der Fortsatz 53 in der Bohrung des Trägerkörpers 38 verschoben wird. Der Fortsatz 53 ragt durch den zentralen Kanal des Einsatzstückes 33 hindurch und geht in den Abstandshalter 26 über. Am Fortsatz 53 ist noch eine Stufe 54 ausgebildet, gegen die der metallische Ventilkörper 55 des ersten Ventils von der Ventilfeder 46 gedrückt wird. Der Ventilkörper 55 ist auf dem dünneren Teil des Fortsatzes 53 axial verschiebbar. Zwischen beiden Teilen ist eine Schieberpassung vorgesehen. Anzumerken ist auch, daß zwischen dem Einsatzstück 33 und dem Ventilträger 38 eine Feder abgestützt ist, die ebenso wie die Feder 46, die zwischen Ventilkörper 55 und einem Sicherungsring 56 gespannt ist, dafür sorgt, daß das jeweilige Ventil sicher schließt.

Die Verbindung des Ventilkörpers 38 mit dem Fortsatz 53 ist so abgestimmt, daß in der Grundstellung des Zentralventils das erste Ventil, gebildet aus Ventilkörper 55 und Ventilsitz 35, einen Öffnungsabstand A aufweist, während das zweite Ventil, gebildet aus dem Dichtungsring 40 bzw. dem Wulst 41 und der Dichtfläche 37, einen Öffnungsabstand B aufweist. Der Abstand A ist kleiner als der Abstand B.

Das in Fig. 5 dargestellte einfache Zentralventil 51 im Schwimmkolben 6 unterscheidet sich kaum vom oben beschriebenen zweiten Ventil. Das Zentralventil 51 beseht aus einem Ventilträger 57, der in der Längsbohrung einen 31 geführt ist, wobei Durchlässe 39 frei bleiben. An den Ventilträger 57 ist ein Stößel 15 angeformt, der mit dem Stift 14 zusammenwirkt und das Zentralventil 51 in der Ruhestellung offenhält. Der Stößel 15 ist so ausgebildet, daß an ihm vorbei ein Druckmittelfluß im Axialkanal 30 möglich ist.

Im Einsatzstück 33 ist eine Blende 58 ausgebildet, die nur einen begrenzten Druckmittelfluß gestattet und daher beim Zurückstellen des Kolbens 6 für eine Druckdifferenz zwischen Arbeitskammer 21 und Zwischenraum 29 sorgt. Das Zentralventil 51 muß dann nur gegen den niedrigeren Druck im Zwischenraum 29 öffnen und der Wulst 41 des Dichtrings 40 wird nicht beschädigt.

Die Funktion des Hauptbremszylinders entspricht der Funktion, der weiter oben erläutert worden ist.

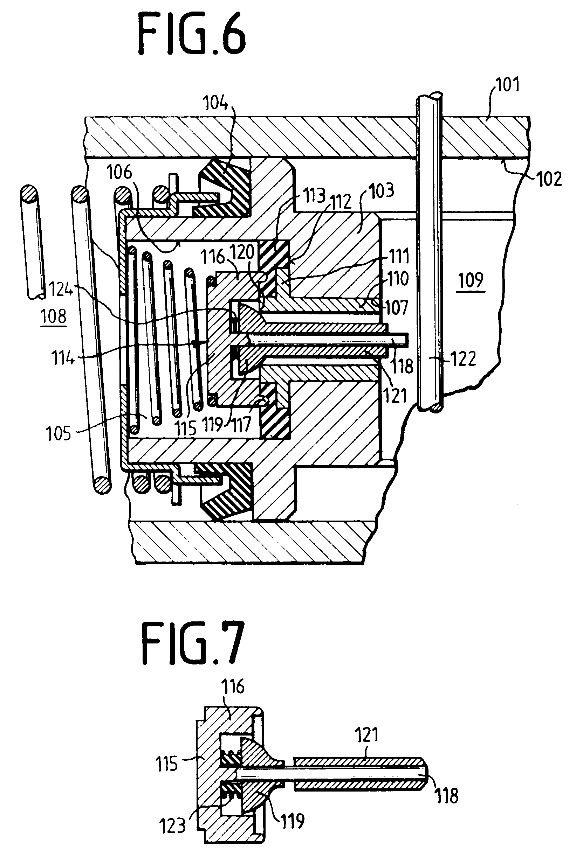

Die Figur 6 zeigt
ein Hauptbremszylindergehäuse 101 mit einer Längsbohrung 102 in der Arbeitskolben 103 dichtend geführt ist. Die Abdichtung erfolgt mittels einer Dichtung 104 an der Mantelfläche des Arbeitskolbens 103.

Der Arbeitskolben 103 begrenzt mit seiner einen Stirnseite (in der Darstellung der Linken) einen Druck- oder Arbeitsraum 108 und mit seiner anderen Stirnseite (in der Darstellung der Rechten) einen Nachfüllraum 109, der in ständiger Druckmittelverbindung mit einem nicht dargestellten Druckmittelvorratsbehälter aufweist.

Der Arbeitskolben 103 weist eine zentrale Stufenbohrung 105 auf, deren Achse mit der Achse des Arbeitskolbens übereinstimmt. Der Bereich 106 größeren Querschnitts schließt an den Druckraum 108 an, während der Bereich 107 kleineren Querschnitts in den Nachfüllraum 109 mündet.

Der Übergang zwischen den beiden Bereichen erfolgt über eine Stufe, die über eine senkrecht zur Längsachse stehende Ringfläche 112 verfügt. In dem Bereich 107 kleineren Querschnitts ist eine Hülse 110 eingesetzt, die auf der einen Seite mit der Kolbenstirnfläche abschließt und mit ihrer anderen Seite zum Teil in den Bereich 106 größeren Querschnitts hineinragt. Der Außendurchmesser der Hülse 110 entspricht dem Innendurchmesser des Bereichs 107 kleineren Querschnitts.

Die Hülse 10 weist einen Kragen 111 auf, der einen rechteckigen Querschnitt aufweist und sich senkrecht zur Hülsenlängsachse nach außen erstreckt. Mit einer Seite liegt der Kragen an der Ringfläche 112 an. Zwischen der anderen Seite des Kragens 111 und dem Ende der Hülse, das in den Bereich 106 größeren Querschnitts hineinragt, liegt ein Abstand vor.

In dem Bereich zwischen der Hülse, der Innenwand des Bereich 105 größeren Querschnitts und der Ringfläche 112 bzw. dem Kragen 111 ist eine im wesentlichen ringförmige Dichtung 113 angeordnet. Die Dichtung schließt unmittelbar an die benannten Begrenzungsflächen an, so daß nur eine Seite der Ringdichtung 113, die sich senkrecht zur Längsachse erstreckt, an dem Bereich 106 größeren Querschnitts angrenzt.

Der Ventilkörper 114 zur Ringdichtung 113 besteht aus einer Scheibe 115 mit einem ringförmigen Kragen 116 an seinem Außenrand, wobei der Kragen eine umlaufende Nase 117 trägt, die in das weichelastische Material der Ringdichtung 113 eingedrückt werden kann. Der Kragen 116 ist dabei an die Hülse 110 angelegt. Der Ventilkörper 114 befindet sich im Bereich 106 größeren Querschnitts. Mit dem Teller 115 ist ein Stift 118 verbunden, der sich vom Zentrum der Scheibe 115 entlang der Längsachse durch die Hülse 110 hindurch in den Nachfüllraum 109 erstreckt. Der Stift 118 kann, wie in der Figur dargestellt, einstückig mit der Scheibe 115 ausgebildet sein oder aber mit ihr vernietet oder verschraubt sein. Das eben beschriebene Ventil wird als das zweite Ventil bezeichnet.

Der Dichtsitz 120 des ersten Ventils wird von der Innenkante der Hülse 110 gebildet, die an dem Ende liegt, das in den Bereich 106 größeren Querschnitts hineinragt.

Der Ventilkörper besteht aus einer Halbkugel 119, deren gekrümmter Bereich an den Dichtsitz 120 anlegbar ist. Statt einer Halbkugel können natürlich auch Formen, z.B. Kegel oder Kugel vorgesehen werden.

Die Halbkugel 119 verfügt über eine zentrale Bohrung durch die der Stift 118 passend hindurchgeführt ist. Auf dem Stift 118 sitzt weiterhin ein hülsenförmiger Stift 121, der gemäß der Figur 1 mit der Halbkugel 119 verbunden ist. Dieser Stift ragt ebenfalls in den Nachfüllraum 109 hinein, allerdings bezogen auf die Stirnfläche des Arbeitskolbens 103 nicht soweit wie der Stift 118.

Zwischen den Ventilkörpern ist eine Feder 124 vorgesehen, die koaxial angeordnet ist.

Gemäß der Figur 2 kann der hülsenförmige Stift 121 auch von der Halbkugel 119 getrennt sein und auf dem Stift 118 verschiebbar aber fixierbar angeordnet werden. Dabei ist ein Spalt zwischen der Halbkugel 119 und dem hülsenförmigen Stift 122 vorgesehen, so daß der Stift 122 einen Anschlag bildet.

In Figur 7 ist eine weitere Besonderheit dargestellt. Die Feder 124 nach Figur 6 ist in dieser Ausführungsform als Gummifeder 123 ausgebildet. Sie ist hülsenförmig und ist koaxial auf dem Stift angeordnet.
Sie hat gleichzeitig die Aufgabe, den Spalt zwischen dem Stift 118 und der Bohrung des Ventilkörpers 119 druckmitteldicht abzuschließen.

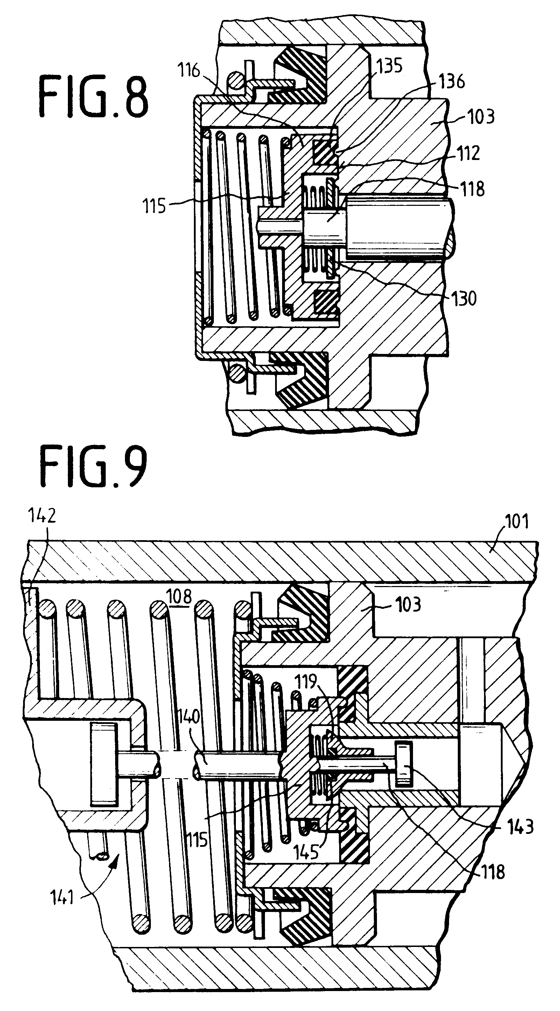

Desweiteren wird auf Figur 8 Bezug genommen. Es bestehen zwei Unterschiede zu Figur 6 bzw. 7. Der Schließkörper des ersten Ventils ist als Ringscheibe 130 ausgebildet und sitzt auf dem Stift 118 des zweiten Ventils, das in diesem Ausführungsbeispiel mit dem Teller 115 vernietet ist.

Eine weitere Änderung besteht darin, daß der weichelastische Dichtring 113 nicht mehr kolbenfest ausgebildet ist, sondern mit dem Ventilkörper des zweiten Ventils verbunden ist. Dazu ist eine Nut 135 vorgesehen, die im Kragen 116 ausgebildet ist und sich in Längsrichtung zur Ringfläche 112 hin öffnet. Die Ringfläche 112 weist in Höhe der Nut eine umlaufende Schwelle 136 auf.

Die Nut 135 nimmt den Dichtring 113 auf, wobei die Nutwände und der Nutboden den Ring 113 von drei Seiten umfassen. Gelangt der Kragen 116 in Anlage an die Ringfläche 112, so wird der Ring 113 vollständig umfaßt.

In der Figur 9 ist eine weitere Abwandlung gezeigt und zwar in der Betätigungsart des Doppelventils.

In der Figur 6 ist ein Anschlagstift 122 quer zur Längsachse des Hauptzylinders vorgesehen, dieser befindet sich im Nachfüllraum 109 und ist im Gehäuse 101 verankert. Der Stift 118 bzw. der hülsenförmige Stift 121 sind an den Anschlagstift 122 anlegbar. Demgegenüber ist in der Figur 4 eine Fesselanordnung vorgesehen. Dazu verfügt der Ventilkörper 114 des zweiten Ventils über einen weiteren Stift 140, der in den Druckraum 108 hineinragt. Der weitere Stift 140 ist über eine Fesselanordnung 141 mit einem Gegenstück 142 verbunden. Diese Art der Zentralventilbetätigung ist wohl bekannt und brauch nicht näher erläutert zu werden.

In der Figur 9 ist der Ventilkörper 119 des ersten Ventils gedichtet (Dichtung 145) auf dem Stift 118 geführt. Diese Maßnahme kann auch bei den Ausführungsformen gemäß den Figuren 6 und 7 vorgesehen werden.

Im allgemeinen wird diese Maßnahme nicht notwendig sein, da eine gewisse kleine Leckage am ersten Ventil erlaubt werden kann.

In dem Ausführungsbeispiel nach Figur 9 verfügt der Ventilkörper 119 nicht über ein eigenes Betägigungsstück wie in der Figur 1, sondern wird entsprechend der Figur 2 über einen Anschlag 143 am Stift 118 mitgenommen.

Das Zentralventil arbeitet wie folgt:
In der Figur 6 und der Figur 9 wird das Zentralventil in einer geschlossenen Stellung gezeigt, also bei einer Betätigung des Hauptbremszylinders.

Während einer Bremsschlupfregelung wird Druckmittel in den Druckraum 108 geleitet, wodurch der Hauptzylinderkolben 103 gemäß der Darstellung nach rechts verschoben wird. Dadurch legt sich gemäß der Figur 6 zunächst der Stift 118 an den Anschlagstift 122 an, so daß der Ventilkörper 114 vom Dichtring 113 gelöst wird, wodurch das zweite Ventil geöffnet wird. Da das erste Ventil noch geschlossen ist, erfolgt die Öffnung des zweiten Ventils nicht unter einem hohen Druckgefälle. Bei einer weiteren Verschiebung des Arbeitskolbens 103 legt sich nun auch die Hülse 121 an den Anschlagstift 122 an, so daß nun auch das erste Ventil geöffnet wird. Gemäß der Figur 2 wird der Ventilkörper des ersten Ventils von der am Stift 118 fixierten Hülse 121 mitgenommen. Die Öffnung des zweiten Ventils erfolgt tatsächlich unter einem hohen Druckgefälle, da dieses Ventil aber aus metallischem Material besteht, ist eine Beschädigung nicht zu erwarten.

Die Ausführung nach Figur 9 arbeitet entsprechend. Die Öffnungsvorgänge erfolgen entsprechend über die Einrichtung 140, 141, 142.

Das zweite Ventil garantiert somit sicheres Schließen des Druckraums 108 gegen den Nachfüllraum 109, bzw. den Druckmittelvorratsbehälter. Das erste Ventil garantiert ein sicheres Öffnen des Zentralventils auch unter Druck, ohne daß dabei das zweite Ventil mit der Gummidichtung beschädigt wird.

### Bezugszeichenliste

- 1: Hauptbremszylinder
- 2: Gehäuse
- 3: Sackbohrung
- 4: Stopfen
- 5: Anschlüsse
- 6: Schwimmkolben
- 7: Druckstangenkolben
- 8: Teilstück
- 9: Feder
- 10: Feder
- 11: Zentralventil
- 12: Zentralventil
- 13: Schlitz
- 14: Stift
- 15: Stößel
- 16: Stift
- 17: Schlitz
- 18: Ring
- 19: Anschlagscheibe
- 20: Stößel
- 21: Arbeitsraum
- 22: Arbeitsraum
- 23: Ausgleichsbohrung
- 24: Ausgleichsbehälter
- 25: Gegenstück
- 26: Abstandshalter
- 27: Scheibe
- 28: Ring
- 29: Zwischenraum
- 30: Axialkanal
- 31: Längsbohrung
- 32: erste Stufe
- 33: Einsatzstück
- 34: Dichtung
- 35: Dichtsitz
- 36: zweite Stufe
- 37: Dichtfläche
- 38: Trägerkörper
- 39: Durchlaß
- 40: Dichtring
- 41: Wulst
- 42: Klemmeinrichtung
- 43: Betätigungsstift
- 44: Ventilkugel
- 45: Führungselement
- 46: Ventilfeder
- 47: Hülse
- 48: Anschlag
- 49: Feder
- 51: Zentralventil
- 52: Zentralventil
- 53: Fortsatz
- 54: Stufe
- 55: Ventilkörper
- 56: Sicherungsring
- 57: Ventilträger
- 58: Blende
- 101: Hauptbremszylindergehäuse
- 102: Längsbohrung
- 103: Arbeitskolben
- 104: Dichtung
- 105: Stufenbohrung
- 106: Bereich
- 107: Bereich
- 108: Arbeitsraum
- 109: Nachfüllraum
- 110: Hülse
- 111: Kragen
- 112: Ringfläche
- 113: Ringdichtung
- 114: Ventilkörper
- 115: Teller
- 116: Kragen
- 117: Nase
- 118: Stift
- 119: Halbkugel
- 120: Dichtsitz
- 121: Stift
- 122: Stift
- 123: Gummifeder
- 124: Feder
- 135: Nut
- 136: Schwelle
- 140: Stift
- 141: Fesselanordnung
- 142: Gegenstück
- 143: Anschlag
- 145: Dichtung

## Patentansprüche

1. Hauptbremszylinder für eine blockiergeschützte, hydraulische Bremsanlage mit einem eine Arbeitskammer (21,22) begrenzenden Arbeitskolben (6,7), der zur Verringerung des Volumens der Arbeitskammer (21,22) verschiebbar geführt ist, einem Druckmittelvorratsbehälter (24), einem Zentralventil (11,12) in der Verbindung Arbeitsraum - Druckmittelvorratsbehälter, das in der Grundstellung des Arbeitskolbens (6,7) die Verbindung offenhält und bei einer Verschiebung des Arbeitskolbens (6,7) schließt, wobei das Zentralventil (11,12) aus zwei Einzelventilen (35,44;37,40) besteht, die hintereinander geschaltet sind und beim Verschieben des Arbeitskolbens (6,7) nacheinander schließen, dadurch **gekennzeichnet,** daß das zuerst schließende, erste Ventil aus einem Ventilsitz (35) und einem Ventilschließkörper (44) besteht, wobei beide Teile aus Metall sind, und daß das andere, zweite Ventil ebenfalls aus einem Ventilsitz (37) und einem Ventilkörper (40,41) besteht, wobei mindestens eines der Teile aus weichelastischem Material besteht.

2. Hauptbremszylinder nach Anspruch 1 dadurch **gekennzeichnet,** daß das erste Ventil die Verbindung zwischen der Arbeitskammer (21,22) und einem Zwischenraum (29) kontrolliert, und das zweite Ventil die Verbindung zwischen dem Zwischenraum (29) und dem Vorratsbehälter (24) herstellt.

3. Hauptbremszylinder nach einem der vorhergehenden Ansprüche dadurch **gekennzeichnet,** daß beide Ventile im Arbeitskolben (6,7) ausgebildet sind, wobei die Ventilsitze (35,37) beider Ventile Teile des Arbeitskolbens (6,7) sind.

4. Hauptbremszylinder nach Anspruch 3 dadurch **gekennzeichnet,** daß der Ventilsitz (35) des ersten Ventils an einem Einsatzstück (33) ausgebildet ist, das mit dem Arbeitskolben (6,7) fest verbunden ist.

5. Hauptbremszylinder Anspruch 1, dadurch **gekennzeichnet,** daß an einem Trägerkörper (38) des zweiten Ventils ein sich in Betätigungsrichtung erstreckender zylindrischer Fortsatz (53) befestigbar ist, auf dem der Ventilkörper (55) des ersten Ventils verschiebbar geführt ist.

6. Hauptbremszylinder nach Anspruch 5 dadurch **gekennzeichnet,** daß das Zentralventil (52) als gefesseltes Zentralventil ausgebildet ist und der Fortstz (53) von einem Abschnitt des Fesselelements (25,26) gebildet ist.

7. Hauptbremszylinder nach Anspruch 5 oder 6, dadurch **gekennzeichnet,** daß am Fortsatz (53) eine Stufe (54) ausgebildet ist, gegen die der Ventilkörper (55) in seiner Ruhestellung von einer Ventilfeder (46) gedrückt wird und durch die er in dieser Stellung in einem Abstand (A) von seinem Dichtsitz (35) gehalten wird.

8. Hauptbremszylinder nach Anspruch 5, dadurch **gekennzeichnet,** daß zwischen dem ersten Ventilkörper (55) und dem Fortsatz (53) eine Schieberpassung vorgesehen ist.

9. Hauptbremszylinder nach einem der vorhergehenden Ansprüche, dadurch **gekennzeichnet,** daß das erste Ventil als Plattenventil ausgebildet ist.

10. Hauptbremszylinder nach einem der Ansprüche 1 bis 8, dadurch **gekennzeichnet,** daß das erste Ventil als Kegelventil ausgebildet.

11. Hauptbremszylinder nach Anspruch 1, dadurch **gekennzeichnet,** daß durch eine Längsbohrung des Hauptbremszylinders (1) ein Querstift (14,16) gesteckt ist, an den ein Betätigungsstößel (15,20) für die Ventile anlegbar ist.

12. Hauptbremszylinder nach Anspruch 11, dadurch **gekennzeichnet,** daß der Ventilkörper (40) des zweiten Ventils an einem Ventilträger (38) ausgebildet ist, an dem der Betätigungsstößel (15,20) angeformt ist, der an den Querstift (14,20) anlegbar ist.

13. Hauptbremszylinder nach Anspruch 11, dadurch **gekennzeichnet,** daß der Ventilträger (38) für das zweite Ventil mit dem Betätigungsstift (43) für das erste Ventil verbunden ist.

14. Hauptbremszylinder nach Anspruch 12, dadurch **gekennzeichnet,** daß der Betätigungsstift (43) für das erste Ventil und der Ventilträger (38) miteinander unverrückbar verbindbar sind, und daß sie vor einer Verbindung gegeneinander verschiebbar sind.

15. Hauptbremszylinder nach Anspruch 1, dadurch **gekennzeichnet,** daß in der Grundstellung des Zentralventils (11,12) der Ventilkörper (44) des ersten Ventils einen Abstand A zu seinem Ventilsitz aufweist und der Ventilkörper (40,41) des zweiten Ventils einen Abstand B zum Ventilsitz (37) aufweist, wobei der Abstand A kleiner ist als der Abstand B.

16. Hauptbremszylinder nach einem der vorhergehenden Ansprüche, dadurch **gekennzeichnet,** daß der Ventilkörper des ersten Ventils aus einer Ventilkugel (44) besteht, und daß der Ventilkörper des zweiten Ventils aus einem gummielastischen Ring (40) besteht, der in einer Nut am Ventilträger (38) einvulkanisiert ist.

17. Hauptbremszylinder nach Anspruch 1, dadurch **gekennzeichnet**, daß die Ventilsitze der Einzelventile bezogen auf die Verschiebungsachse des Arbeitskolbens (103) in etwa auf gleicher Höhe liegen und daß die radiale Ausdehnung des Ventilsitzes des einen Ventils kleiner ist als die radiale Ausdehnung des Ventilsitzes des anderen Ventils.

18. Hauptbremszylinder nach Anspruch 17, dadurch **gekennzeichnet**, daß der Ventilkörper (119) und der Ventilsitz (120) des ersten Ventils aus metallischem Material bestehen und der Ventilsitz den kleineren Radius aufweist und daß Ventilsitz (113) bzw. Ventilkörper (117) des zweiten Ventils aus weichelastischem Material besteht und der Ventilsitz den größeren Radius aufweist.

19. Hauptbremszylinder nach Anspruch 17 oder 18, dadurch **gekennzeichnet,** daß der Ventilkörper (115) des zweiten Ventils über einen Längstift (118) verfügt, wobei der Ventilkörper (119) des ersten Ventils eine Längsbohrung aufweist, durch die der Stift (118) hindurchgeführt ist.

20. Hauptbremszylinder nach Anspruch 17, dadurch **gekennzeichnet**, daß der Ventilkörper (119) des ersten Ventils mit einem Betätigungsstift (121) verbunden ist, der als Hülse ausgebildet ist und um den Stift (118) des zweiten Ventils angeordnet ist.

21. Hauptbremszylinder nach Anspruch 17, dadurch **gekennzeichnet**, daß der Stift (118) des zweiten Ventils über einen Anschlag (121,143) verfügt, an dem der Ventilkörper (119) des ersten anlegbar ist.

22. Hauptbremszylinder nach Anspruch 17, dadurch **gekennzeichnet**, daß der Ventilkörper des ersten Ventils als Ringscheibe (130) ausgebildet ist.

23. Hauptbremszylinder nach einem der vorhergehenden Ansprüche, dadurch **gekennzeichnet**, daß ein weichelastischer Ring (113) in eine Nut (135) am Ventilkörper (115,116) des zweiten Ventils eingelegt ist, und dort form- und/oder stoffschlüssig gehalten wird.

24. Hauptbremszylinder nach Anspruch 19, dadurch **gekennzeichnet**, daß eine Gummifeder (123) zwischen den Ventilkörpern vorgesehen ist, die auf dem Stift (118) angeordnet ist und eine Dichtfunktion aufweist.

## Claims

1. A master brake cylinder for an anti-lock hydraulic brake system comprising a working piston (6,7) confining a working chamber (21,22), with the working piston being displaceably guided for reducing the volume of the working chamber (21,22), further comprising a pressure fluid reservoir (24), a central valve (11,12) provided in the connection between the working chamber and the pressure fluid reservoir, which, in the basic position of the working piston (6,7), keeps the connection open and closes it upon displacement of the working piston (6,7), with the central valve (11,12) comprising two single valves (35,44; 37,40) which are connected in series and close one after the other on displacement of the working piston (6,7),
characterized in that the first valve, which closes the first, is composed of a valve seat (35) and a valve body (44), with both parts being made of metal, and in that the other, the second, valve also is composed of a valve seat (37) and a valve body (40,41), with at least one of the parts being made of a soft-elastic material.

2. A master brake cylinder as claimed in claim 1,
characterized in that the first valve governs the connection between the working chamber (21,22) and an interspace (29), and the second valve establishes the connection between the interspace (29) and the reservoir (24).

3. A master brake cylinder as claimed in any one of the preceding claims,
characterized in that both valves are formed in the working piston (6,7), with the valve seats (35,37) of both valves being parts of the working piston (6,7).

4. A master brake cylinder as claimed in claim 3,
characterized in that the valve seat (35) of the first valve is provided on an insert (33) rigidly connected to the working piston (6,7).

5. A master brake cylinder as claimed in claim 1,
characterized in that a cylindrical extension (53) extending in the actuating direction, is fixable to a carrier body (38) of the second valve, on which extension (53) the valve body (55) of the first valve is displaceably guided.

6. A master brake cylinder as claimed in claim 5,
characterized in that the central valve (52) is configured as a captivated central valve and the extension (53) is formed by a section of the captivating element (25,26).

7. A master brake cylinder as claimed in claims 5 or 6,
characterized in that a step (54) is formed on the extension (53), against which step the valve body (55), when in its inactive position, is forced by means of a valve spring (46) holding it in that position at a distance (A) from its sealing seat (35).

8. A master brake cylinder as claimed in claim 5,
characterized in that a slide fit is provided between the first valve body (55) and the extension (53).

9. A master brake cylinder as claimed in any one of the preceding claims,
characterized in that the first valve is configured as a disc-type valve.

10. A master brake cylinder as claimed in any one of claims 1 to 8,
characterized in that the first valve is configured as a poppet valve.

11. A master brake cylinder as claimed in claim 1,
characterized in that a transverse pin (14,16) is plugged through a longitudinal bore of the master brake cylinder (1), against which transverse pin an actuating plunger (15,20) for the valves is movable into abutment.

12. A master brake cylinder as claimed in claim 11,
characterized in that the valve body (40) of the second valve is provided on a valve carrier (38), on which is formed the actuating plunger (15,20) which is movable into abutment on the transverse pin (14,16).

13. A master brake cylinder as claimed in claim 11,
characterized in that the valve carrier (38) for the second valve is connected to the actuating pin (43) for the first valve.

14. A master brake cylinder as claimed in claim 12,
characterized in that the actuating pin (43) for the first valve and the valve carrier (38) can be rigidly interconnected and that, before being connected, they are displaceable with respect to one another.

15. A master brake cylinder as claimed in claim 1,
characterized in that, in the basic position of the central valve (11,12), the valve body (44) of the first valve is at a distance A from its valve seat, and the valve body (40,41) of the second valve is at a distance B from the valve seat (37), with the distance A being smaller than the distance B.

16. A master brake cylinder as claimed in any one of the preceding claims,
characterized in that the valve body of the first valve is a valve ball (44), and in that the valve body of the second valve is a rubber-elastic ring (40) vulcanized in a groove on the valve carrier (38).

17. A master brake cylinder as claimed in claim 1,
characterized in that the valve seats of the single valves, with respect to the axis of displacement of the working piston (103), approximately lie at the same level, and in that the radial extension of the valve seat of the one valve is smaller than the radial extension of the valve seat of the other valve.

18. A master brake cylinder as claimed in claim 17,
characterized in that the valve body (119) and the valve seat (120) of the first valve are made of a metallic material and the valve seat is of the smaller radius, and in that the valve seat (113) and the valve body (117), respectively, of the second valve is of a soft-elastic material and the valve seat is of the larger radius.

19. A master brake cylinder as claimed in claim 17 or 18,
characterized in that the valve body (115) of the second valve comprises an elongated pin (118), with the valve body (119) of the first valve having a longitudinal bore through which pin (118) is guided.

20. A master brake cylinder as claimed in claim 17,
characterized in that the valve body (119) of the first valve is connected to an actuating pin (121) configured as a sleeve and arranged about the pin (118) of the second valve.

21. A master brake cylinder as claimed in claim 17,
characterized in that the pin (118) of the second valve comprises a stop (121,143) against which the valve body (119) of the first valve is movable into abutment.

22. A master brake cylinder as claimed in claim 17,
characterized in that the valve body of the first valve is configured as an annular disc (130).

23. A master brake cylinder as claimed in any one of the preceding claims,
characterized in that a soft-elastic ring (113) is placed in a groove (135) on the valve body (115,116) of the second valve to be held therein in form-locking and/or molecularly interfaced manner.

24. A master brake cylinder as claimed in claim 19,
characterized in that a rubber spring (123), provided between the valve bodies, is arranged on the pin (118) and has a sealing function.

## Revendications

1. Maître-cylindre de frein pour un système de freinage hydraulique anti-blocage des roues, comprenant un piston de travail (6, 7) délimitant une chambre de travail (21, 22), guidé de façon coulissante de manière à réduire le volume de la chambre de travail (21, 22), un réservoir (24) de fluide de pression, une valve centrale (11, 12) disposée dans la liaison chambre de travail - réservoir de fluide de pression, maintenant ouverte cette liaison lorsque le piston de travail (6, 7) se trouve dans sa position de repos, et la fermant lorsque le piston de travail (6, 7) est déplacé, la valve centrale (11, 12) étant composée de deux valves individuelles (35, 44; 37, 40) raccordées l'une derrière l'autre et se fermant l'une après l'autre lors du déplacement du piston de travail,
caractérisé en ce que la première valve, qui se ferme en premier, est constituée d'un siège de valve (35) et d'un obturateur (44), les deux éléments étant en métal, et en ce que l'autre, deuxième valve est également constituée d'un siège de valve (37) et d'un obturateur (40, 41), l'un au moins des deux éléments étant réalisé en une matière élastique souple.

2. Maître-cylindre de frein selon la revendication 1, caractérisé en ce que la première valve commande la communication entre la chambre de travail (21, 22) et un intervalle (29), et en ce que la deuxième valve établit la communication entre l'intervalle (29) et le réservoir (24).

3. Maître-cylindre de frein selon l'une des revendications précédentes, caractérisé en ce que les deux valves sont réalisées dans le piston de travail (6, 7), les sièges de valve (35, 37) des deux valves faisant partie du piston de travail (6, 7).

4. Maître-cylindre de frein selon la revendication 3, caractérisé en ce que le siège de valve (35) de la première valve est conformé sur un insert (33), qui est solidaire du piston de travail (6, 7).

5. Maître-cylindre de frein selon la revendication 1, caractérisé en ce qu'un prolongement cylindrique (53), s'étendant dans le sens d'actionnement, peut être fixé sur un élément support (38), l'obturateur (55) de la première valve étant guidé de façon coulissante sur ce prolongement.

6. Maître-cylindre de frein selon la revendication 5, caractérisé en ce que la valve centrale (52) est réalisée sous forme d'une valve enchaînée, et en ce que le prolongement (53) est formé par une partie de l'élément d'enchaînement (25, 26).

7. Maître-cylindre de frein selon la revendication 5 ou 6, caractérisé en ce qu'un épaulement (54) est conformé sur le prolongement (53), l'obturateur (55) étant forcé, dans sa position de repos, contre cet épaulement par un ressort de valve (46), et l'épaulement maintenant l'obturateur, dans cette position, à une distance (A) par rapport à son siège d'étanchéité (35).

8. Maître-cylindre de frein selon la revendication 5, caractérisé en ce qu'un ajustage coulissant est prévu entre le premier obturateur (55) et le prolongement (53).

9. Maître-cylindre de frein selon l'une des revendications précédentes, caractérisé en ce que la première valve est réalisée sous forme d'une valve à palette.

10. Maître-cylindre de frein selon l'une des revendications 1 à 8, caractérisé en ce que la première valve est réalisée sous forme d'une valve à cône.

11. Maître-cylindre de frein selon la revendication 1, caractérisé en ce qu'une goupille transversale (14, 16) est emmanchée à travers un alésage longitudinal du maître-cylindre de frein (1), sur laquelle une tige de commande (15, 20) des valves peut s'appuyer.

12. Maître-cylindre de frein selon la revendication 11, caractérisé en ce que l'obturateur (40) de la deuxième valve est conformé sur un support de valve (38), sur lequel est formée la tige de commande (15, 20) qui vient s'appuyer sur la goupille transversale (14, 16).

13. Maître-cylindre de frein selon la revendication 11, caractérisé en ce que le support de valve (38) de la deuxième valve est relié à la tige de commande (43) de la première valve.

14. Maître-cylindre de frein selon la revendication 12, caractérisé en ce que la tige de commande (43) de la première valve et le support de valve (38) sont reliés l'un à l'autre de façon fixe, et qu'ils peuvent être déplacés l'un par rapport à l'autre avant la réalisation de cette liaison.

15. Maître-cylindre de frein selon la revendication 1, caractérisé en ce que, dans la position de repos de la valve centrale (11, 12), l'obturateur (44) de la première valve présente une distance A par rapport à son siège de valve, et que l'obturateur (40, 41) de la deuxième valve présente une distance B par rapport au siège de valve (37), la distance A étant inférieure à la distance B.

16. Maître-cylindre de frein selon l'une des revendications précédentes, caractérisé en ce que l'obturateur de la première valve est constitué par une bille de valve (44), et que l'obturateur de la deuxième valve est constitué par une bague (40) réalisée en une matière élastique souple, vulcanisée en place dans une gorge ménagée dans le support de valve (38).

17. Maître-cylindre de frein selon la revendication 1, caractérisé en ce que les sièges de valve des valves individuelles sont situés à peu près à la même hauteur, par rapport à l'axe de coulissement du piston de travail, et en ce que l'extension radiale du siège de valve de l'une des valves est inférieure à l'extension radiale du siège de valve de l'autre valve.

18. Maître-cylindre de frein selon la revendication 17, caractérisé en ce que l'obturateur (119) et le siège de valve (120) de la première valve sont réalisés en une matière métallique, et que son siège de valve présente le plus petit des rayons, et en ce que le siège de valve (113) ou l'obturateur (117) de la deuxième valve est réalisé en une matière élastique souple, et que ce siège de valve présente le rayon le plus grand.

19. Maître-cylindre de frein selon la revendication 17 ou 18, caractérisé en ce que l'obturateur (115) de la deuxième valve dispose d'une tige longitudinale (118), l'obturateur (119) de la première valve comportant un alésage longitudinal, à travers lequel est guidé la tige (118).

20. Maître-cylindre de frein selon la revendication 17, caractérisé en ce que l'obturateur (119) de la première valve est relié à une tige de commande (121) réalisée sous forme d'une douille et disposée autour de la tige (118) de la deuxième valve.

21. Maître-cylindre de frein selon la revendication 17, caractérisé en ce que la tige (118) de la deuxième valve dispose d'une butée (121, 143), sur laquelle peut s'appuyer l'obturateur (119) de la première valve.

22. Maître-cylindre de frein selon la revendication 17, caractérisé en ce que l'obturateur de la première valve est réalisé sous forme d'une rondelle annulaire (130).

23. Maître-cylindre de frein selon l'une des revendications précédentes, caractérisé en ce qu'une bague élastique souple (113) est insérée dans une gorge (135) ménagée dans l'obturateur (115, 116) de la deuxième valve et y est maintenue par conjugaison des formes et/ou par adhésion des matières.

24. Maître-cylindre de frein selon la revendication 19, caractérisé en ce qu'un ressort en caoutchouc (123) est prévu entre les obturateurs, ce ressort étant disposé sur la tige (118) et assurant une fonction d'étanchéité.
